# EUROPEAN PATENT SPECIFICATION

(11) **EP 2 616 652 B1**
(45) Date of publication and mention of the grant of the patent: **02.09.2015**
(21) Application number: 11785488.5
(22) Date of filing: 02.11.2011
(51) Int. Cl.: F02B 21/00, F02M 35/10

(54) **AIR CONNECTOR FOR AN INTERNAL COMBUSTION ENGINE**
LUFTANSCHLUSS FÜR EINEN VERBRENNUNGSMOTOR
RACCORD PNEUMATIQUE POUR UN MOTEUR À COMBUSTION INTERNE

(30) Priority: 03.11.2010 GB 201018653
(43) Date of publication of application: 24.07.2013
(73) Proprietor: Brunel University, Middlesex UB8 3PH (GB)
(72) Inventor: MA, Thomas, South Woodham Ferrers Essex CM3 5YL (GB); ZHAO, Hua, Gerrards Cross Buckinghamshire SL9 7JA (GB)
(74) Representative: Harrison IP Limited
(86) International application number: PCT/IB2011/054853
(87) International publication number: WO 2012/059865

(56) References cited:
- EP-A1- 1 308 614
- DE-A1- 3 117 143
- US-A- 1 132 393
- US-A- 2 995 890
- US-A1- 2004 148 932
- US-A1- 2008 066 708
- US-B1- 7 231 998

## Description

### Field of the invention

The present invention relates to an internal combustion engine having air connector mounted opposite an intake or exhaust port in an associated intake pipe or exhaust pipe to allow the port to communicate selectively with the associated pipe and with a compressed air storage tank.

### Background of the invention

Engine braking is commonly used in heavy goods vehicles in which the engine is temporarily converted into an energy absorber while being motored by the vehicle and the fuel to the engine is shut off. To increase the braking torque generated by this motored engine, an engine braking device, which is a temporarily operated valve actuating mechanism, is commonly installed in the engine for modifying the valve timing of the engine to allow the compression pressure, generated within the engine cylinder during the compression stroke of the engine, to be released irreversibly from the engine. Traditionally, the exhaust valve of the engine is kept opened during the compression stroke of the engine when the engine braking device is activated and the energy of the compressed air is released to the exhaust system of the engine. Similarly, the intake valve of the engine may be kept open during the compression stroke of the engine producing a similar engine braking effect but the energy of the compressed air is released to the intake system of the engine.

In either case, instead of wasting this compressed air energy generated during braking, it has been proposed to divert it to a compressed air storage tank so that it can be captured and re-used for various purposes in the vehicle after braking. This represents an air hybrid vehicle in which the engine is selectively operable is several modes, namely, normal fuel burning mode producing power for driving of the vehicle, air compressor mode absorbing power and producing compressed air during braking of the vehicle, and possibly, air motor mode re-using the captured compressed air to drive the engine.

In the above air hybrid vehicle when the engine is operating in the air compressor mode, the engine braking device acting on either the exhaust valve or the intake valve of the engine is activated to achieve compression release from the engine cylinder. At the same time, an air diverting device is required to capture the compressed air from the exhaust system or intake system of the engine, respectively. Such an air diverting device will have a similar function and design when installed in either location but the operating environment will have to be taken into account in view of the higher temperature of the exhaust system. In this context, it is preferred to transfer the installation of the engine braking device from its traditional position acting on the exhaust valve to a similar position acting on the intake valve producing similar engine braking effect, thus allowing the air diverting device to be installed in the intake system of the engine which will be more economical and durable.

### Object of the invention

The invention seeks to enable an engine to operate in a variety of modes while minimising the complexity of the air diverting device.

### Summary of the invention

According to the present invention, there is provided an internal combustion engine for use in a vehicle having a compressed air storage tank, the engine having intake and exhaust ports connected to associated intake and exhaust pipes, characterised by an air connector serving to enable the tank to be filled with gases compressed by the engine, the air connector being mounted opposite an intake or an exhaust port within an associated intake or exhaust pipe and comprising a stopper mounted on a rod that is formed with an air passage incorporating a check valve, wherein, during use of the air connector, the stopper is movable by an actuator between an open position in which the port communicates with the associated intake or exhaust pipe and a closed position in which the stopper isolates the port from the associated intake or exhaust pipe and establishes communication between the port and the tank by way of the air passage in the rod and the check valve, the check valve being biased in a direction to prevent escape of air from the tank.

Preferably, the actuator is a pneumatic actuator comprising a pneumatic air cylinder connectable to receive compressed air from the compressed air storage tank, and a piston having an opening communicating between the air passage in the rod and the pneumatic air cylinder.

The piston should have an effective area larger than the air blockage area of the stopper such that the closing force exerted on the piston by the air pressure in the pneumatic air cylinder exceeds the opening force exerted on the stopper by the air pressure transmitted to or generated within the blocked intake port.

A return spring is preferably provided in the air connector to retract the stopper from the intake port entrance when the pneumatic air cylinder is disconnected from the compressed air storage tank and vented instead to the ambient atmosphere.

When the engine is operating in certain modes, it may be desired to allow air to flow from the compressed air storage tank into the intake port, i.e. in the opposite direction to that allowed by the check valve. This may be achieved by providing an externally mounted abutment for opening the check valve to allow flow in both directions when the stopper is in the closed position. Such an abutment may lift the valve closure member of the check valve off its valve seat for as long as the stopper remains in the closed position.

Referring to an engine with an engine braking device installed acting on an intake valve of the engine, an air connector as so far described may be used in a four-stroke internal combustion engine having two intake valves per cylinder and two separate intake ports leading to the respective intake valves. In such an engine, in addition to a normal mode of operation in which fuel is burnt to generate power and both intake ports communicate with their respective intake pipes or a common plenum, the engine is operable in at least one of two air hybrid modes, namely an air compressor mode and an air motor mode. In the air compressor mode air is drawn into the engine cylinder during the intake stroke of the engine by way of a first intake port and this air is supplied during the ensuing compression stroke of the engine to the compressed air storage tank by way of the second intake port which is closed by the stopper of an air connector. In the air motor mode, compressed air is supplied to the engine cylinder during the intake stroke from the compressed air storage tank by way of a first intake port while it is closed by the stopper of an air connector (the check valve in this mode being kept opened by an externally mounted abutment) and this air is discharged from the engine cylinder during the ensuing compression stroke of the engine by way of the second intake port.

In the above engine, the first intake valve is operated with a normal intake event during all modes of operation of the engine and the second intake valve is operated with a first valve event during the normal mode of operation of the engine and with a second valve event during the air compressor and air motor modes of operation of the engine.

The above engine is also operable in a temporary boost, fuel burning mode, for example to compensate for turbo lag or to provide short periods of high power operation. In this mode, both intake ports are blocked by respective air connectors and pressurised air is supplied from the compressed air storage tank to an intake port by way of an air connector of which the check valve is kept opened by an externally mounted abutment, both intake valves being operated with the valve events for normal mode operation of the engine.

The air connector may be used in another four-stroke internal combustion engine having only one intake valve per cylinder or multiple intake valves sharing a common or siamesed intake port. In such an engine, in addition to a normal mode of operation in which fuel is burnt to generate power and the intake port is open, the connector can enabled the engine to operate in an air compressor mode.

For this purpose, at least one additional flow passage is provided in the stopper for connecting the air space surrounding the intake port entrance with the interior of the intake port when the intake port is connected by the air connector, and a non-return valve is arranged in the additional flow passage for permitting air flow by way of the stopper into the intake port.

When operating in the air compressor mode, air is drawn into the engine cylinder during the intake stroke of the engine from the intake pipe by way of the non-return valve in the air connector, and this air is compressed and supplied by way of the check valve in the air connector to the compressed air storage tank during the ensuing compression stroke of the engine.

In the above engine, the intake valve is operated with a normal intake event during the normal mode of operation of the engine and is operated with a second valve event during the air compressor mode of operation of the engine.

The above engine is also operable in a temporary boost, fuel burning mode in which the intake port is blocked by an air connector and pressurised air is supplied from the compressed air storage tank to the intake port by way of a check valve in the air connector kept opened by an externally mounted abutment, while both intake valves are operated with the valve events for normal mode of operation of the engine.

### Brief description of the drawings

The invention will now be described further, by way of example, with reference to the accompanying drawings, in which:
Figure 1 is a schematic sectional representation of an air connector,
Figure 2 is a schematic sectional representation of an alternative design of an air connector,

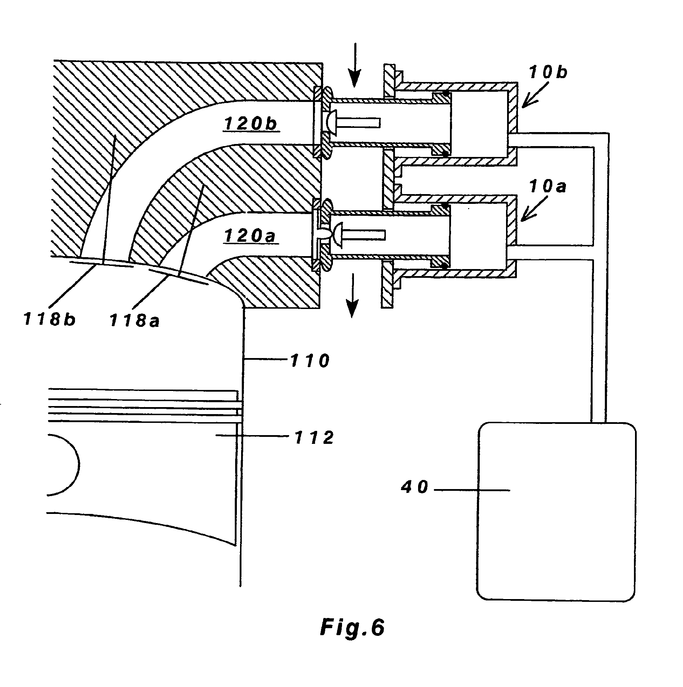

Figures 3, 4, 5 and 6 show one cylinder of an internal combustion engine with two intake ports and respective air connectors positioned for different operating modes,
Figures 7 shows one cylinder of another internal combustion engine with a single intake port and a single air connector positioned for the air compressor operating mode,
Figure 8 is a valve timing diagram showing the valve events when the engine is operating in its normal power generating mode, and
Figure 9 is a valve timing diagram showing the valve events when the engine is operating in an air compressor mode or air motor mode.

### Detailed description of the preferred embodiment

Whilst the air connector may be mounted opposite either an intake or exhaust port of an engine working in conjunction with an associated engine braking device installed acting on an intake or exhaust valve respectively, the following description refers to an air connector mounted opposite an intake port of an engine working in conjunction with an engine braking device installed acting on an intake valve of the engine.

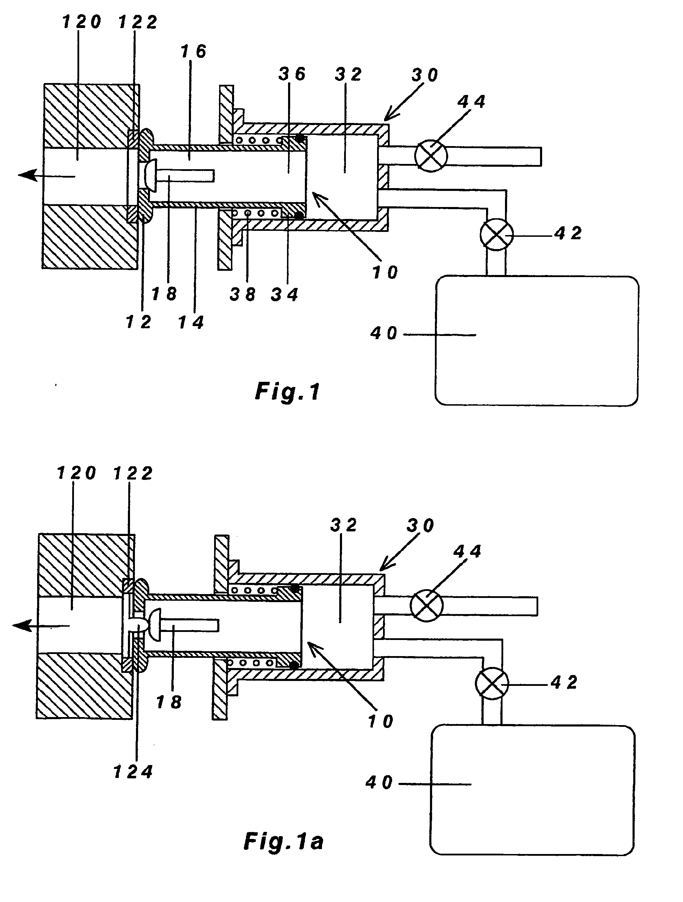

Figure 1 shows an air connector 10 mounted opposite an intake port 120 leading in the direction of the arrow to an intake valve of an engine cylinder to allow the intake port 120 to communicate selectively with the intake pipe outside the intake port 120 and with a compressed air storage tank 40. The connector 10 comprises a stopper 12 mounted on a rod 14 movable by an actuator 30 between an open position in which the intake port 120 communicates with the intake pipe and a closed position in which the stopper 12 seals around the entrance of the intake port 120 to isolate the intake port 120 from the intake pipe. In Figure 1, the stopper 12 is pushed by the actuator 30 towards the entrance of the intake port 120 and pressed against a sealing element 122 surrounding the port entrance with a sufficient force to hold a tight seal around the port entrance. An air passage 16 is provided in the stopper 12 and the rod 14 to allow communication between the intake port 120 and the compressed air storage tank 40 when the stopper 12 is in the closed position. A check valve 18 arranged in the air passage 16 is biased in a direction to prevent escape of air from the compressed air storage tank 40 in all positions of the stopper 12.

The actuator 30 is a pneumatic actuator comprising a pneumatic air cylinder 32 connectable to receive compressed air from the compressed air storage tank 40, and a piston 34 having an opening 36 communicating between the air passage 16 in the rod 14 and the pneumatic air cylinder 32. In Figure 1, the piston 34 is shown sealed for movement along the pneumatic air cylinder 32 by an O-ring. Alternatively it may be sealed for movement by a flexible diaphragm.

The piston 34 has an effective area larger than the air blockage area of the stopper 12 such that the closing force exerted on the piston 34 by the air pressure in the pneumatic air cylinder 32 exceeds the opening force exerted on the stopper 12 by the air pressure transmitted to or generated within the blocked intake port 120.

The actuator 30 further comprises a return spring 38 to retract the stopper 12 from the entrance of the intake port 120 when the pneumatic air cylinder 32 is disconnected from the compressed air storage tank 40 and vented instead to the ambient atmosphere.

The check valve 18 includes a spring biased valve closure member operative to interact with an externally mounted abutment 124 to allow air flow in both directions when the stopper 12 is in the closed position. The abutment 124 is shown in Figure 1a as a bar mounted across the sealing element 122 for stopping and lifting the check valve 18 as the stopper 12 approaches the sealing element 122 when it is pushed by the actuator 30 towards the entrance of the intake port 120.

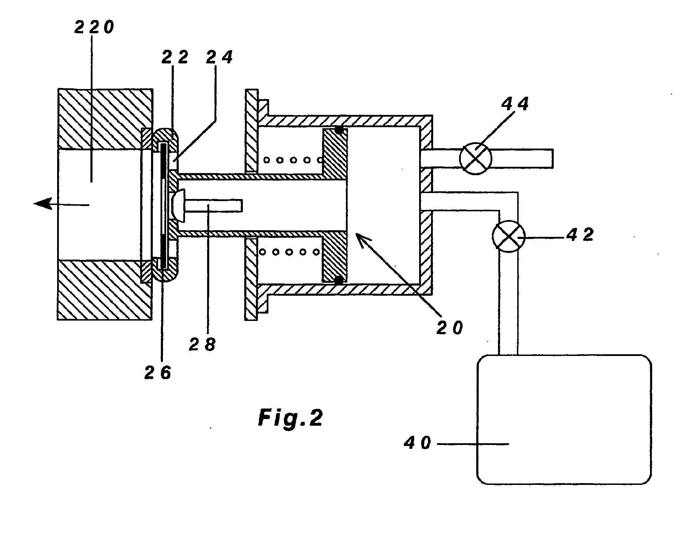

Figure 2 shows an alternative design of an air connector 20 with a larger stopper 22 for blocking a larger intake port 220. The stopper 22 has additional flow passages 24 in an area surrounding the rod for connecting the air space outside the intake port 220 with the interior of the intake port 220 when the stopper 22 is in the closed position. A disc 26, positioned behind the flow passages 24, is arranged to function as a non-return valve which permits air flow from the intake pipe into the intake port 220 by way of the flow passages 24 and a central opening in the disc 26, and blocks any reverse flow from the intake port 220 towards the intake pipe.

The above air connector 10 or 20 may be used in an internal combustion engine in a variety of operating modes.

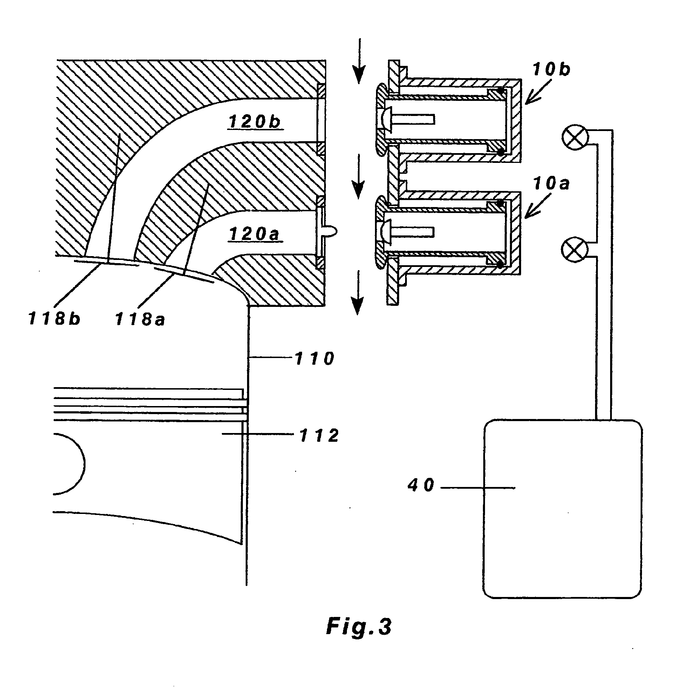

Figure 3 shows a cylinder 110 of a four-stroke internal combustion engine. The piston 112 reciprocates within the cylinder 110 to define a variable volume working chamber. The working chamber has two intake valves 118a, 118b. It also has an exhaust valve (not shown) and all the valves operate in a conventional manner. The air supply to the engine is ducted along an intake plenum in the direction of the flow arrows.

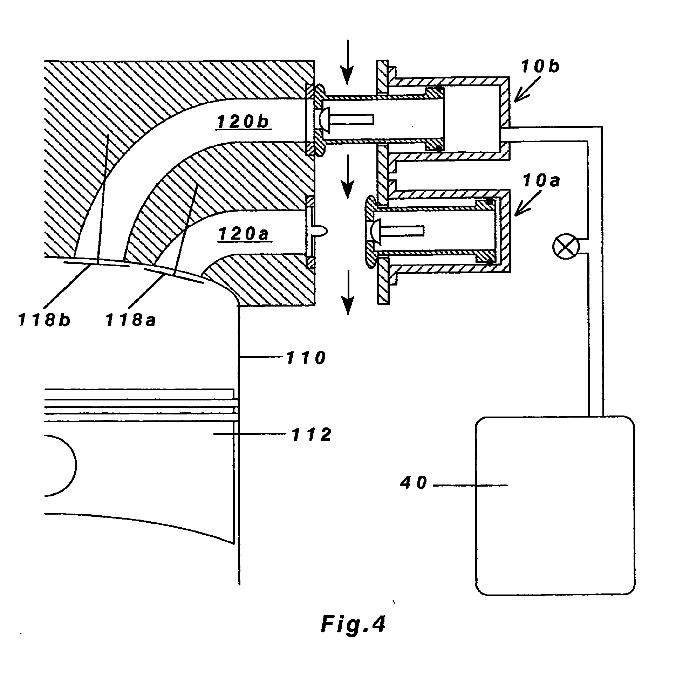

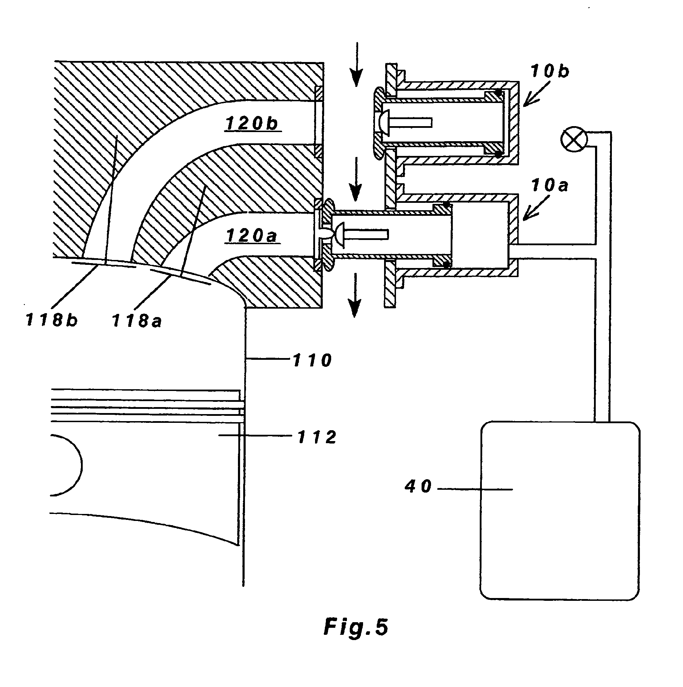

Intake ports 120a, 120b lead to the respective intake valves 118a, 118b and each port has a respective air connector 10a, 10b similar to that shown in Figure 1 mounted opposite the port entrances. In such an engine, in addition to a normal mode of operation as shown in Figure 3 in which fuel is burnt to generate power and both air connectors are in the open position so that the intake ports 120a, 120b communicate with the intake plenum, the engine is operable in at least one of two air hybrid modes, namely an air compressor mode shown in Figure 4 and an air motor mode shown in Figure 5.

In Figure 4, the engine operates in an air compressor mode in which air is drawn into the engine cylinder 110 during the intake stroke of the engine by way of the first intake port 120a with the air connector 10a in the open position, and this air is compressed and supplied by way of the second intake port 120b which is connected by the air connector 10b to the compressed air storage tank 40 during the ensuing compression stroke of the engine.

In Figure 5, the engine operates in an air motor mode in which compressed air is supplied by way of the first intake port 120a which is connected by the air connector 10a working in conjunction with an externally mounted abutment to permit air flow from the compressed air storage tank 40 to the engine cylinder 110 during the intake stroke of the engine, and this air is discharged from the engine cylinder 110 during the ensuing compression stroke of the engine by way of the second intake port 120b with the air connector 10b in the open position.

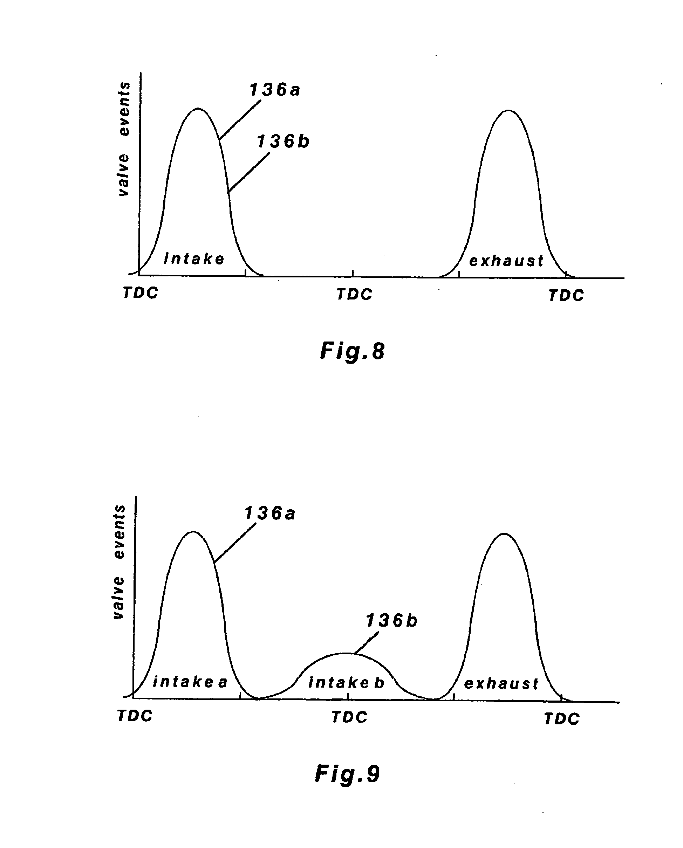

The valve events of the above engine are shown in Figures 8 and 9. The first intake valve 118a is operated with a normal intake event 136a shown in Figures 8 and 9 during all modes of operation of the engine and the second intake valve 118b is operated with a first valve event 136b shown in Figure 8 during the normal mode of operation of the engine and with a second valve event 136b shown in Figure 9 during the air compressor and air motor modes of operation of the engine.

The above engine is also operable in another temporary boost, fuel burning mode for example to compensate for turbo lag or to provide short periods of high power operation. In this case, both air connectors 10a, 10b are in the closed position. Pressurised air is supplied to the engine cylinder 110 by way of the first intake port 120a which is connected to the compressed air storage tank 40 by the air connector 10a working in conjunction with an externally mounted abutment, while both intake valves 118a, 118b are operated with the valve events 136a, 136b for normal mode of operation of the engine shown in Figure 8. The air connector 10b blocks the second intake port 120b and prevents escape of pressurised air to the intake plenum even though the second intake valve 118b is open during the intake stroke of the engine.

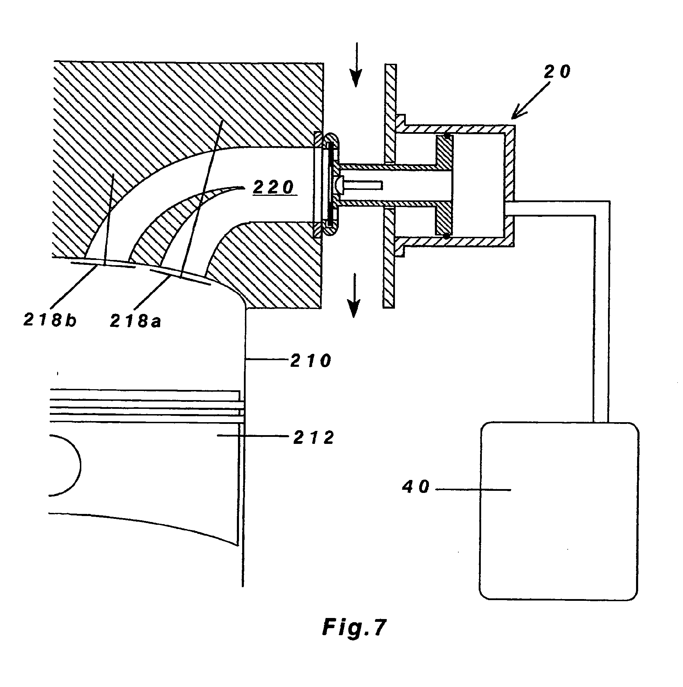

Figure 7 shows another four-stroke internal combustion engine having two intake valves 218a, 218b sharing a common or siamesed intake port 220. The intake port 220 has an air connector 20 similar to that shown in Figure 2 mounted opposite the port entrance. In such an engine, in addition to a normal mode of operation (not shown in Figure 7) in which fuel is burnt to generate power and the air connector 20 is in the open position so that the intake ports 220 communicates with the intake plenum, the engine is also operable in an air compressor mode with the air connector 20 in the closed position shown in Figure 7.

In Figure 7, the engine operates in an air compressor mode in which air is drawn into the engine cylinder 210 during the intake stroke of the engine from the intake plenum by way of the non-return valve in the air connector 20, and this air is compressed and supplied by way of the check valve in the air connector 20 to the compressed air storage tank 40 during the ensuing compression stroke of the engine.

In the above engine, the first intake valve 118a is operated with a normal intake event 136a shown in Figures 8 and 9 during all modes of operation of the engine and the second intake valve 118b is operated with a first valve event 136b shown in Figure 8 during the normal mode of operation of the engine and with a second valve event 136b shown in Figure 9 during the air compressor mode of operation of the engine.

The above engine is also operable in another temporary boost, fuel burning mode for example to compensate for turbo lag or to provide short periods of high power operation. In this case, an air connector 10 or air connector 20 is mounted opposite the intake port 220 and in the closed position. Pressurised air is supplied to the engine cylinder 210 by way of the intake port 220 which is connected to the compressed air storage tank 40 by the air connector 10 or 20 working in conjunction with an externally mounted abutment, while both intake valves 218a, 218b are operated with the valve events for normal mode of operation of the engine.

## Claims

1. An internal combustion engine for use in a vehicle having a compressed air storage tank (40), the engine having intake and exhaust ports (120) connected to associated intake and exhaust pipes, **characterised by** an air connector (10) serving to enable the tank to be filled with gases compressed by the engine, the air connector (10) being mounted opposite an intake or an exhaust port (120) within an associated intake or exhaust pipe and comprising a stopper (12) mounted on a rod (14) that is formed with an air passage (16) incorporating a check valve (18), wherein, during use of the air connector (10), the stopper (12) is movable by an actuator (30) between an open position in which the port (120) communicates with the associated intake or exhaust pipe and a closed position in which the stopper (12) isolates the port (120) from the associated intake or exhaust pipe and establishes communication between the port (120) and the tank (40) by way of the air passage (16) in the rod (14) and the check valve (18), the check valve (18) being biased in a direction to prevent escape of air from the tank (40).

2. An internal combustion engine as claimed in claim 1, wherein the actuator (30) is a pneumatic actuator comprising a pneumatic air cylinder (32) connectable to receive compressed air from the compressed air storage tank (40), and a piston (34) having an opening (36) communicating between the air passage (16) in the rod (14) and the pneumatic air cylinder (32), the piston (34) having an effective area larger than the air blockage area of the stopper (12) such that the closing force exerted on the piston (34) by the air pressure in the pneumatic air cylinder (32) exceeds the opening force exerted on the stopper (12) by the air pressure transmitted to or generated within the blocked port (120).

3. An internal combustion engine as claimed in claim 2, further comprising a return spring (38) to retract the stopper (12) from the port entrance when the pneumatic air cylinder (32) is disconnected from the compressed air storage tank (40) and vented instead to the ambient atmosphere.

4. An internal combustion engine as claimed in any preceding claim, wherein the check valve (18) includes a spring biased valve closure member operative to interact with an externally mounted abutment to allow air flow in both directions when the stopper is in the closed position.

5. An internal combustion engine as claimed in any preceding claim, wherein at least one non-return valve is provided in an area of the stopper surrounding the rod to permit air flow between the port and the associated pipe when the stopper is in the closed position.

6. An internal combustion engine as claimed in any preceding claim, wherein the engine is a four-stroke engine having two separate intake ports per cylinder leading to respective intake valves, and wherein an air connector is mounted in an intake pipe or intake plenum opposite at least one of the intake ports of each cylinder.

7. An internal combustion engine as claimed in any one of claims 1 to 5, wherein the engine is a four-stroke engine having a single intake port per cylinder leading to one or more intake valves, wherein an air connector is mounted in an intake pipe or intake plenum opposite the intake port of each cylinder.

## Patentansprüche

1. Interner Verbrennungsmotor zur Verwendung in einem Fahrzeug mit einem Druckluftvorratsbehälter (40), wobei der Motor Einlass- und Abgaskanäle (120) aufweist, die mit zugehörigen Einlass- und Abgasrohren verbunden sind, **gekennzeichnet durch** einen Luftanschluss (10), der dazu dient, dass der Behälter mit **durch** den Motor erzeugtem Druckgas gefüllt werden kann, wobei der Luftanschluss (10) gegenüber von einem Einlass- oder Abgaskanal (120) innerhalb eines zugehörigen Einlass- oder Abgasohres befestigt ist und einen Stopper (12) umfasst, der an einer Stange (14) befestigt ist, die mit einem Luftdurchlass (16) geformt ist, der ein Rückschlagventil (18) umfasst, wobei der Stopper (12) während der Verwendung des Luftanschlusses (10) über einen Aktor (30) zwischen einer Offenstellung, in welcher der Kanal (120) mit dem zugehörigen Einlass- oder Abgasrohr kommuniziert und einer Schließstellung bewegt werden kann, in welcher der Stopper (12) den Kanal (120) von dem zugehörigen Einlass- oder Abgasrohr isoliert und er stellt über den Luftdurchlass (16) in der Stange (14) und das Rückschlagventil (18) eine Kommunikation zwischen dem Kanal (120) und dem Behälter (40) her, wobei das Rückschlagventil (18) in einer Richtung vorgespannt ist, um das Entweichen von Luft aus dem Behälter (40) zu verhindern.

2. Interner Verbrennungsmotor nach Anspruch 1, wobei der Aktor (30) ein pneumatischer Aktor ist, der einen pneumatischen Druckluftzylinder (32), der verbunden werden kann, um Druckluft aus dem Druckluftvorratsbehälter (40) aufzunehmen und einen Kolben (34) umfasst, der eine Öffnung (36) aufweist und zwischen dem Luftdurchlass (16) in der Stange (14) und dem pneumatischen Druckluftzylinder (32) kommuniziert, wobei der Kolben (34) eine effektive Fläche aufweist, die größer als der Luftstaubereich des Stoppers (12) ist, sodass die Schließkraft, die auf den Kolben (34) durch den Luftdruck in dem pneumatischen Druckluftzylinder (32) ausgeübt wird, die Öffnungskraft übersteigt, die auf den Stopper (12) durch den Luftdruck ausgeübt wird, der an den gesperrten Kanal (120) übertragen oder in diesem generiert wird.

3. Interner Verbrennungsmotor nach Anspruch 2, ferner umfassend eine Rückholfeder (38), um den Stopper (12) von dem Kanaleingang zurückzuholen, wenn der pneumatische Druckluftzylinder (32) von dem Druckluftvorratsbehälter (40) getrennt und stattdessen an die Umgebungsatmosphäre entlüftet wird.

4. Interner Verbrennungsmotor nach einem der vorhergehenden Ansprüche, wobei das Rückschlagventil (18) ein federgespanntes Ventilverschlussglied umfasst, dass betrieben werden kann, um mit einem extern befestigten Abutment zu interagieren, um den Luftstrom in beide Richtungen zuzulassen, wenn sich der Stopper in der Schließstellung befindet.

5. Interner Verbrennungsmotor nach einem der vorhergehenden Ansprüche, wobei mindestens ein Rückschlagventil in einem Bereich des Stoppers bereitgestellt wird, welcher die Stange umgibt, um den Luftstrom zwischen dem Kanal und dem zugehörigen Rohr zuzulassen, wenn sich der Stopper in der Schließstellung befindet.

6. Interner Verbrennungsmotor nach einem der vorhergehenden Ansprüche, wobei der Motor ein Viertaktmotor mit zwei separaten Einlasskanälen pro Zylinder ist, die zu jeweiligen Einlassventilen führen und wobei ein Luftanschluss in einem Einlassrohr oder Einlassplenum gegenüber mindestens eines der Einlasskanäle jedes Zylinders befestigt ist.

7. Interner Verbrennungsmotor nach einem der Ansprüche 1 bis 5, wobei der Motor ein Viertaktmotor mit einem einzelnen Einlasskanal pro Zylinder ist, der zu einem oder mehreren Einlassventilen führt, wobei ein Luftanschluss in einem Einlassrohr oder Einlassplenum gegenüber des Einlasskanals jedes Zylinders befestigt ist.

## Revendications

1. Moteur à combustion interne destiné à être utilisé dans un véhicule possédant un réservoir de stockage d'air comprimé (40), le moteur comportant des orifices d'admission et d'échappement (120) raccordés à des tuyaux d'admission et d'échappement associés, **caractérisé par** un raccord pneumatique (10) servant à permettre le remplissage du réservoir avec des gaz comprimés par le moteur, le raccord pneumatique (10) étant disposé face à un orifice d'admission ou d'échappement (120) dans un tuyau d'admission ou d'échappement associé et comprenant un obturateur (12) monté sur une tige (14) qui est formé par un conduit d'air (16) comportant un clapet anti-retour (18), en cours d'utilisation du raccord pneumatique (10) ledit obturateur (12) pouvant être déplacé par un actionneur (30) entre une position ouverte dans laquelle l'orifice (120) communique avec le tuyau d'admission ou d'échappement associé et une position fermée dans laquelle l'obturateur (12) isole l'orifice (120) du tuyau d'admission ou d'échappement associé et établit une communication entre l'orifice (120) et le réservoir (40) au moyen du conduit d'air (16) dans la tige (14) et le clapet anti-retour (18), le clapet anti-retour (18) étant rappelé dans un sens pour empêcher l'air de s'échapper du réservoir (40).

2. Moteur à combustion interne selon la revendication 1, ledit actionneur (30) étant un actionneur pneumatique comprenant un vérin pneumatique à air (32) pouvant être raccordé pour recevoir de l'air comprimé provenant du réservoir de stockage d'air comprimé (40), et un piston (34) possédant un orifice (36) communiquant entre le conduit d'air (16) dans la tige (14) et le vérin pneumatique à air (32), le piston (34) possédant une surface utile plus grande que la surface bloquant l'air de l'obturateur (12) de sorte que la force de fermeture exercée sur le piston (34) par la pression d'air dans le vérin pneumatique à air (32) dépasse la force d'ouverture exercée sur l'obturateur (12) par la pression d'air transmise à l'orifice bouché (120) ou générée à l'intérieur de celui-ci.

3. Moteur à combustion interne selon la revendication 2 comprenant en outre un ressort de rappel (38) pour retirer l'obturateur (12) de l'entrée de l'orifice lorsque le vérin pneumatique à air (32) est débranché du réservoir de stockage d'air comprimé (40) et est au contraire relié à l'atmosphère ambiante.

4. Moteur à combustion interne selon l'une quelconque des revendications précédentes, ledit clapet anti-retour (18) incluant un élément de fermeture de clapet rappelé par ressort destiné à interagir avec une butée montée de façon externe pour permettre un flux d'air dans les deux sens lorsque l'obturateur est en position fermée.

5. Moteur à combustion interne selon l'une quelconque des revendications précédentes, au moins un clapet anti-retour étant fourni dans une zone de l'obturateur entourant la tige pour permettre un flux d'air entre l'orifice et le tuyau associé lorsque l'obturateur est en position fermée.

6. Moteur à combustion interne selon l'une quelconque des revendications précédentes, ledit moteur étant un moteur à quatre temps possédant deux orifices d'admission distincts par cylindre conduisant à des soupapes d'admission respectives et ledit raccord pneumatique étant monté dans un tuyau d'admission ou un plénum d'admission faisant face à au moins l'un des orifices d'admission de chaque cylindre.

7. Moteur à combustion interne selon l'une quelconque des revendications 1 à 5, ledit moteur étant un moteur à quatre temps possédant un seul orifice d'admission par cylindre conduisant à une ou plusieurs soupapes d'admission, ledit raccord pneumatique étant monté dans un tuyau d'admission ou un plénum d'admission faisant face à l'orifice d'admission de chaque cylindre.
